Europäisches Patentamt

European Patent Office

Office européen des brevets

(11) Publication number: 0 188 913
A2

# EUROPEAN PATENT APPLICATION

(21) Application number: 85309375.5

(51) Int. Cl.⁴: **B 01 J 29/04**

(22) Date of filing: 20.12.85

(30) Priority: 27.12.84 US 686766

(71) Applicant: **MOBIL OIL CORPORATION, 150 East 42nd Street, New York New York 10017 (US)**

(72) Inventor: **Derouane, Eric Gerard, 56, Rue des Champs Verts, B-5020 Namur (Champion) (BE)**
Inventor: **Dessau, Ralph Moritz, 14 Cellar Road, Edison, N.J. 08817 (US)**

(74) Representative: **Grundy, Derek George Ritchie, CARPMAELS & RANSFORD 43, Bloomsbury Square, London WC1A 2RA (GB)**

(43) Date of publication of application: 30.07.86 Bulletin 86/31

(84) Designated Contracting States: BE DE FR GB IT NL SE

(54) A shape-selective group VIII metal-containing catalyst composition comprising a porous crystalline silicate.

(57) A shape-selective metal-containing catalyst composition comprises a porous crystalline silicate which has a Constraint Index between 1 and 12 and which contains boron in tetrahedral coordination in the crystal lattice of the silicate and a metal from Group VIII of the Periodic Table of Elements, the catalyst composition containing less than 0.1% by weight of elemental aluminum on an ash basis.

### A METAL-CONTAINING CATALYST COMPOSITION,
### ITS SYNTHESIS AND ITS USE

This invention relates to a metal-containing catalyst composition, its synthesis and its use in processes such as catalytic reforming, dewaxing, dehydrogenation of paraffins and olefin hydrogenation.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction, within which there are a large number of smaller cavities which may be interconnected by a number of still smaller channels or pores. These cavities and pores are uniform in size within a specific zeolitic material. Because the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three dimensional framework of $SiO_4$ and $AlO_4$ in which the tetrahedra are cross-linked by the sharing of oxygen atoms, whereby the ratio of the total aluminum and silicon atoms to oxygen atoms is 1:2. The electrovalence of the tetrahedra containing alumina is balanced by the inclusion in the crystal of a cation, for example an alkali metal, an alkaline earth metal or an organic cation. This can be expressed wherein the ratio of aluminum to the number of various cations, such as Ca/2, Sr/2, Na, K or Li, is equal to unity. One type of cation may be exchanged entirely or partially with another type of cation utilizing ion exchange techniques in a conventional manner. By means of such cation exchange, it has been possible to vary the properties of a given aluminosilicate by suitable selection of the cation. The cavities and pores are occupied by molecules of water prior to dehydration and/or possibly by organic species from the synthesis mixture in the as-synthesized materials.

A convenient measure of the extent to which a zeolite provides control to molecules of varying sizes to its internal structure is the Constraint Index of the zeolite. Zeolites which provide a highly restricted access to and egress from its internal structure have a high value for the Constraint Index, and zeolites of this kind usually have pores of small size. On the other hand, zeolites which provide relatively free access to the internal zeolite structure have a low value for the Constraint Index. The method by which Constraint Index is determined is described fully in U. S. Patent No. 4,016,218.

Prior art techniques have resulted in the formation of a great variety of synthetic aluminosilicates. These aluminosilicates have come to be designated by letter or other convenient symbols, as illustrated by zeolite A (U. S. Patent No. 2,882,243), zeolite X (U. S. Patent No. 2,882,244), zeolite Y (U.S. Patent No. 3,130,007), zeolite ZK-5 (U. S. Patent No. 3,247,195), zeolite ZK-4 (U. S. Patent No. 3,314,752), zeolite ZSM-5 (U. S. Patent No. 3,702,886), zeolite ZSM-11 (U. S. Patent No. 3,709,979), zeolite ZSM-12 (U. S. Patent No. 3,832,449), zeolite ZSM-23 (U. S. Patent No. 4,076,842), ZSM-35 (U. S. Patent No. 4,016,245), ZSM-38 (U. S. Patent No. 4,046,859), ZSM-48 (EP-B-15132) and Zeolite Beta (U. S. Patent Nos. 3,308,069 and Re. 28,341).

The $SiO_2/Al_2O_3$ ratio of a given zeolite is often variable. For example, zeolite X can be synthesized with $SiO_2/Al_2O_3$ ratios of from 2 to 3; zeolite Y, from 3 to 6. In some zeolites, the upper limit of $SiO_2/Al_2O_3$ ratio is unbounded. ZSM-5 is one such example wherein the $SiO_2/Al_2O_3$ ratio is at least 5, up to infinity. U. S. Patent No. 3,941,871, now Re. 29,948, discloses a porous crystalline silicate made from a reaction mixture containing no deliberately added alumina and exhibiting the X-ray diffraction pattern characteristic of ZSM-5 type zeolites. U. S. Patent Nos. 4,061,724, 4,073,865 and 4,104,294 describe crystalline silicates or organosilicates of varying alumina and metal content.

The prior art also discloses methods for incorporating into zeolitic materials strong hydrogenation-dehydrogenation metal components, as illustrated by metals such as molybdenum, chromium and vanadium, and Group VIII metals such as cobalt, nickel, platinum and palladium.

U. S. Patent No. 3,201,356 describes a method for activating a crystalline zeolitic molecular sieve catalyst composited with a noble metal component which involves dehydrating the catalyst to a water content of less than 1.8 wt % at a temperature below 160°C (320°F), and thereafter heating the catalyst in the presence of hydrogen at a temperature of about 160°C (320°F).

U. S. Patent No. 3,700,585 in columns 7 and 8, reviews the typical ion exchange techniques employed for introducing metal cations into zeolite structures, such as the techniques described in U. S. Patent Nos. 3,140,249; 3,140,251; and 3,140,253. As a general procedure, a particular zeolite is contacted with a salt solution of the desired replacing cation. The zeolite is then preferably washed with water, dried at 65°-315°C, and calcined in an inert atmosphere at 260°-815°C.

U. S. Patent No. 3,956,104 describes a hydrocracking catalyst which is prepared by a series of steps which include (1) admixing ammonium hydroxide and aluminum sulfate in an aqueous medium to form a soluble aluminum sulfate partial hydrolysis
product; (2) admixing a crystalline aluminosilicate zeolite with the
partial hydrolysis product, effecting complete hydrolysis of the
aluminum sulfate, and aging the resulting mixture for about two
hours; (3) separating and washing the solids; and (4) impregnating
the solids with calculated quantities of Group VIB and Group VIII
metal components, and calcining the resulting composite.

U. S. Patent No. 4,148,713 describes the preparation of
ZSM-5 type of crystalline aluminosilicate zeolites which have
particles coated with an aluminum-free outer shell of silica.
Optionally, the zeolites can contain metal cations of hydrogenation
components such as Group VI and Group VIII metals.

U. S. Patent No. 4,174,272 describes zeolite catalysts
containing platinum group metals, which are employed in non-
hydrogenative endothermic catalytic cracking of hydrocarbons in a
system wherein the endothermic heat required for cracking is
supplied by the catalyst as the heat transfer medium.

The prior art crystalline aluminosilicate zeolites of the
type described above generally exhibit acid activity in their
hydrogen form and have a relatively low silica-alumina ratio.
Acidity and ion-exchange capacity are related to the aluminum
content of a zeolite. A high silica-alumina zeolite exhibits
relatively low acid activity in the hydrogen form.

The shape-selective properties of the prior art zeolites
are adapted for acid-catalyzed reactions, such as cracking of
hydrocarbons. Prior art zeolites are not particularly effective for
shape-selective metal-catalyzed reactions.

U. S. Patent Nos. 4,269,813; 4,327,236; 4,285,919 and
4,331,641 describe the preparation of boron-containing ZSM-5 zeolite
in which boron is introduced in the crystalline lattice structure.
Published British Patent Application No. 2,024,790 describes
modification of ZSM-5 type crystalline materials in which boron,
chromium, beryllium, titanium, vanadium, manganese, iron, cobalt,
zinc, zirconium, rhodium, silver, tin and antimony have entered the crystalline lattice of the silica in place of silicon. Introduction of boron and various other metals into the lattice structure of ZSM-5 is also disclosed in Published British Patent Application No. 2,033,358. As is common practice in zeolite synthesis, the boron-containing materials are prepared hydrothermally by crystallization from a gel or opaque reaction mixture.

In one aspect, the present invention resides in a shape-selective metal-containing catalyst composition comprising a porous crystalline silicate which has a Constraint Index between 1 and 12 and which contains boron in tetrahedral coordination in its crystal lattice and a metal from Group VIII of the Periodic Table of Elements, the catalyst composition containing less than 0.1% weight of elemental aluminum on an ash basis.

In a further aspect, the invention resides in a method _____ as claim 7. A method for preparing a shape-selective metal-containing catalyst composition comprising contacting an ion-exchangeable form of a porous crystalline silicate which has a Constraint Index between 1 and 12 and in which boron is present in tetrahedral coordination, with an aqueous solution of a Group VIII metal compound to exchange and/or sorb said metal in ionic form into the silicate, the final composition containing less than 0.1% of elemental aluminum by weight of the composition on an ash basis.

The catalyst composition of the invention can employ any porous crystalline silicate containing boron in its crystal lattice and having a Constraint Index of 1 to 12. Suitable silicates include boron-containing high silica forms of the zeolites ZSM-11, ZSM-12, ZSM-23, ZSM-35, ZSM-38, ZSM-48, Zeolite Beta, and most preferably ZSM-5. Since the final catalyst composition contains less than 0.1 wt %, and preferably less than 0.05 wt %, of elemental aluminum, the $SiO_2$ to $Al_2O_3$ ratio of the such zeolites will be at least 900, preferably at least 1800, and most preferably at least 5000. The $SiO_2$ to $B_2O_3$ ratio can suitably range from greater than 10 up to 10,000.

Suitable boron-containing highly siliceous zeolites can be prepared in known manner from a reaction mixture containing a source of silica substantially free of alkali metal, an organic directing agent, such as a quaternary ammonium compound, a boron oxide forming compound (for example, boric acid), water, and conveniently at least 0.001% by weight of seed crystals of the required zeolite. No alumina is added to the reaction mixture, although some minor amount of aluminum may be present, for example as an impurity in a component of the mixture. Crystallization is then carried out under either static or stirred condition in polypropylene jars or in stainless steel autoclaves, conveniently at a pH of 10-14 and a temperature of 80° to 180°C for 6 hours to 150 days.

The resultant boron-containing zeolite is then calcined at 200-600°C to remove the organic directing agent. In view of its high $SiO_2$ to $Al_2O_3$ ratio, the resultant zeolite even in the hydrogen-form typically has an alpha value less than 10 as measured by the conventional hexane cracking test described in, e.g., U. S. Patent 3354078.

The resultant boron-containing highly siliceous zeolite is then contacted with an aqueous solution of at least one Group VIII metal salt to exchange or sorb ionic Group VIII metal into the boron-containing material. Preferred Group VIII metals are iron, platinum and palladium. Illustrative of suitable platinum salts are chloroplatinic acid, platinous chloride and platinum amine complexes. Contact with the Group VIII metal salt solution is arranged to incorporate in the zeolite between 0.01-5 wt %, and preferably between 0.1-5 wt %, of the Group VIII metal. In this respect, the term "intrazeolitic", as employed herein with respect to metal content, refers to the metal contained within the internal cavities and channels and pores characteristic of a crystalline zeolite structure.

Following contact of the boron-containing material with the aqueous solution of Group VIII metal compound, the zeolite material normally is washed with water and dried at a temperature of about 110°C.

The Group VIII metal, boron-containing material is then thermally treated by heating in contact with a reducing, oxidizing or inert environment. For example, the environment can be air,

hydrogen, unsaturated hydrocarbon, nitrogen, or the like. The thermal treatment is conducted at a temperature in the range 100°-500°C, normally for a period of time between 0.2-2 hours.

When an unsaturated hydrocarbon reducing agent is employed in the thermal treatment, it is selected from acyclic and cyclic mono- and poly-unsaturated $C_3$-$C_{20}$ alkenes and alkynes. The preferred olefinically-unsaturated hydrocarbons are acyclic and cyclic $C_3$-$C_{12}$ mono-unsaturated alkenes. Illustra- tive of suitable olefinically-unsaturated hydrocarbons are propene, 2-methylpropene, butene, butadiene, pentene, pentadiene, hexene, heptene, octadiene, dodecene, propyne, hexyne, cyclopentene, cyclopentadiene, cyclohexene, vinylcyclohexene and cycloheptene.

After the thermal treatment, the Group VIII metal, boron containing material can be base-exchanged with a Group IA metal cation. The base-exchange with Group IA metallic cations, such as lithium, sodium, potassium or cesium, is for the purpose of reducing the acidity of the Group VIII metal-containing zeolite substrate, for example, acidic sites generated during the thermal treatment.

The base-exchange can be accomplished by slurrying the material in an aqueous solution of a suitable Group IA compound, such as sodium hydroxide, potassium chloride, and cesium hydroxide. As desired, the base-exchange can be arranged, by suitable selection of reagent concentration, pH, contact time and the like, to eliminate part or substantially all the base-exchangeable acidic content. Such a base-exchanged Group VIII metal, boron-containing material is essentially "non-acidic", and exhibits substantially no acid-catalyzed reactivity when employed as a catalyst in hydrocarbon conversion systems. The base-exchanged material can be recovered from the base exchange medium and dried in a conventional manner.

The resultant catalyst composition is particularly suitable for combination with a silica binder to produce a silica bound aggregate. However, other refractory oxide binders can also be used, such as zirconia, magnesia, and titania, although since the

F-3241 --8-- 0188913

first catalyst composition must contain less than 0.1% by weight (on an ash basis) of elemental aluminum, conventional alumina binders should be avoided.

The metal-containing high silica zeolite catalyst composition of the invention exhibits shape-selective hydrogenation, dehydrogenation and dehydrocyclization properties. These properties appear to be attributable mainly to the relative absence of acidic content, and also to the presence of Group VIII metal which is distributed within the intrazeolitic structure. The Group VIII metal is situated within the internal channels and pores of the crystalline zeolite. The intrazeolitic Group VIII metal is capable of catalyzing shape-selective hydrogenolysis, dehydrogenation and aromatization reactions of mixed hydrocarbon feeds. Further, because of the intrazeolitic nature of the Group VIII metal content, the zeolite catalyst composition of the present invention exhibits increased resistance to bulky poisons and reduced aging, relative to other types of supported Group VIII metal catalyst compositions.

Although it is not fully understood, there appear to be at least two factors which account for the shape-selective Group VIII metal reactivity in the catalyst composition of the invention.

First, the high silica zeolitic substrate in the calcined as-synthesized form has an unusual capability to ion-exchange Group VIII metal into the crystalline matrix. At least a several fold excess of Group VIII metal cations can be incorporated in the zeolite, above that which is theoretically projected on the basis of the aluminum content of the zeolite. It is believed that the excess ion-exchange capacity of a high silica zeolite may be at least partly attributable to the presence of ion-exchangeable silicate ions occluded within the intrazeolitic structure.

Secondly, it appears that thermal treatment of the Group VIII metal-containing zeolite, provided it is conducted within the temperature range specified, does not cause any substantial migration of the internally disposed metal atoms out of the intrazeolitic matrix to the crystalline surfaces. This is important since externally situated metal atoms do not exhibit shape-selective reactivity.

The term "shape-selective metal function", as employed herein, refers to the ability of a zeolite composition to convert linear $C_6$-$C_{50}$ hydrocarbons to aromatics more readily than cyclic hydrocarbons convert to aromatics, that is, with a linear/cyclic hydrocarbon conversion ratio of greater than 1.0. The zeolite catalyst composition of the invention exhibits shape-selective metal reactivity, as distinct from shape-selective acid reactivity as disclosed in the prior art.

One suitable test for determining whether a zeolite catalyst composition has a shape-selective metal function involves passing an equimolar mixture of n-heptane and cyclohexane in a nitrogen stream over the catalyst composition at 500°C. The catalyst composition has a shape-selective metal function if, under the test conditions, the conversion of n-heptane is greater than the conversion of cyclohexane, while the aromatic product derived from n-heptane exceeds the aromatic product derived from cyclohexane.

An alternative test involves passing an equimolar mixture of 1,2-dimethylcyclohexane and 1,4 dimethylcyclohexane in a hydrogen stream over the zeolite catalyst composition at 350° to 400°C. The catalyst composition has a shape-selective metal function if, under the test conditions, the molar ratio of p-xylene to o-xylene in the product is greater than 2.0 at less than 50% conversion of the 1,4-isomer.

The catalyst composition of the present invention is particularly useful for hydrocarbon conversions, and in particular for hydrogenation of olefins, dehydrogenation of paraffins, reforming and dewaxing. The operating conditions for these conversions are conventional and known to those skilled in the art.

The present invention will now be further illustrated by the following examples in which all proportions are by weight unless otherwise indicated.

## Example 1

100 grams of 25% tetrapropylammonium hydroxide in water was added to 12.4 grams of acid-washed $SiO_2$ (55 ppm Al) and heated to 100°C to dissolve the silica. 2.75 grams of a solution made from 11.4 grams $H_3BO_3$ and 18 grams NaOH in 50 grams $H_2O$ was added with stirring at 80°-100°C to the silicate solution, resulting in a gel, which was then heated in an autoclave for 5-1/2 days at 170°C. The yield of crystalline product was 4.9 grams.

## Example 2

A silicate solution was prepared as above. To this solution was added 2.75 grams of a solution made from 5.7 grams $H_3BO_3$ and 34 grams of tetrapropylammonium hydroxide. The resulting clear mixture was heated in an autoclave for 5 days at 170°C. The yield of crystalline product was 9.3 grams.

## Example 3

The experiment in Example 2 was repeated, except that 5.5 grams of the $H_3BO_3$ solution was used. The yield of crystalline product was 10.1 grams.

## Example 4

100 grams of 20% tetraethylammonium hydroxide was added to 12.4 grams of acid-washed $SiO_2$ and heated to 100°C. To the resulting silicate solution was added 5.5 grams of a solution made from 5.7 grams $H_3BO_3$ and 34 grams of tetraethylammonium hydroxide. The clear solution was heated in an autoclave for 5 days at 170°C. The yield of crystalline product was 9.5 grams.

Examples 1-4 above illustrate the preparation of boron-containing highly siliceous crystalline materials having the X-ray diffraction pattern of ZSM-5. In Example 1 sodium was intentionally added, whereas in the synthesis mixtures of Examples 2-4 no sodium was intentionally added. The advantage of not adding sodium is clearly seen, because the yields are then almost doubled and in one preparation, Example 3, more than doubled. Analysis by $^{11}$B-NMR indicated the presence of tetrahedrally coordinated boron replacing silicon in the zeolite framework. The dried product material consisted of large (1 micron size or more) single or slightly twinned crystals with platelet morphology. The X-ray diffraction pattern was highly resolved, indicating high sample crystallinity. Scanning electron micrograph pictures did not show contamination of the crystalline product with gel-like impurities. The product analysis of Examples 1-4 are indicated in Table 1 below.

### Example 5

Platinum was incorporated into the calcined product of Example 3 by ion-exchange with a solution of 100 mg Pt $(NH_3)_4Cl_2$ dissolved in 25 ml $H_2O$ per 1 g of calcined product. Pt content after ion-exchange was 0.71% Pt. The platinum catalyst was then heated in oxygen at 1/2°C/min to 300°C and maintained at 300°C for 1 hour prior to use.

### Example 6

Hydrogenation of an equimolar mixture of hexene-1 and 4,4-dimethyl-hexene-1 at 300°C over the catalyst composition of Example 5 resulted in 99% hexene hydrogenation, whereas less than 0.6% of the dimethyl-hexene was hydrogenated. This high selectivity is indicative of Pt located inside the channels of the Boron/ZSM-5.

## TABLE 1

| SAMPLE | EX. 1 | EX. 2 | EX. 3 | EX. 4 |
|---|---|---|---|---|
| Form | As-synth. | As-synth. | As-synth. | As-synth. |
| Organic Cation | TPA[1] | TPA[1] | TPA[1] | TEA[2] |
| B (wt %) | 0.22 | 0.21 | 0.29 | 0.48 |
| Na (wt %) | 0.44 | 0.08 | 0.11 | 0.01 |
| Si (wt %) | 42.06 | 39.13 | 40.38 | 46.20 |
| N (meg/g ash) | 0.68 | 0.63 | 0.62 | 0.67 |
| N (per unit cell) | 3.9 | 3.6 | 3.6 | 3.9 |
| Al (ppm) | 100 | 67 | 65 | 140 |
| $Si/B_2$ | 147 | 158 | 107 | 74 |
| $Si/Al_2$ | 8000 | 11200 | 11900 | 6300 |
| Na/B | 0.94 | 0.20 | 0.18 | 0.01 |
| Yield, grams | 4.9 | 9.3 | 10.1 | 9.5 |
| B (wt %-via cell contraction) | 0.2-0.25 | -- | 0.3-0.35 | -- |
| N (meq/g/ash in $NH_4^+$-form) | 0.24 | 0.22 | 0.31 | 0.45 |
| NMR $^{11}$B INTENSITY (relative areas):[3] | | | | |
| As-synthesized | 1.0 | 2.0 | 2.4 | 4.3 |
| $NH_4^+$ form | 2.0 | 2.8 | 3.8 | 7.0 |

[1]   tetrapropylammonium

[2]   tetraethylammonium

[3]   The boron-11 magic angle spinning NMR spectra were obtained using a JEOL FX-200 Fourier Transform Spectrometer equipped with a Chemagnetics solid state NMR variable temperature broadband magic angle spinning probe. Spectra were obtained using 8-64 90° (4.5 s) pulses at 3 s intervals. Spinning rates ranged from 3.8-4.2 KHz. Spectra were digitized with 8K data points (no zero filling) over a 32 KHz (500 ppm) spectral width. Gated high power proton decoupling was used on the spectra. NMR spectra indicates the presence of tetrahedral boron in the framework.

## Example 7

The catalyst from Example 5 was used for the aromatization of n-hexane. At 536°C in nitrogen, a benzene yield of 43% was observed at 97% hexane conversion.

## Claims

1.    A shape-selective metal-containing catalyst composition comprising a porous crystalline silicate which has a Constraint Index between 1 and 12 and which contains boron in tetrahedral coordination in the crystal lattice of the silicate and a metal from Group VIII of the Periodic Table of Elements, the catalyst composition containing less than 0.1% by weight of elemental aluminum on an ash basis.

2.    The catalyst composition of Claim 1 wherein the elemental aluminum content is less than 0.05% by weight of the composition on an ash basis.

3.    The catalyst composition of Claim 1 or Claim 2 wherein the silicate is a zeolite selected from ZSM-5, ZSM-11, ZSM-12, ZSM-23, ZSM-35, ZSM-38, ZSM-48 and zeolite beta.

4.    The catalyst composition of any preceding Claim wherein the silicate has a $SiO_2$ to $Al_2O_3$ molar ratio greater than 900.

5.    The catalyst composition of any preceding Claim wherein the Group VIII metal content is 0.01 to 5% by weight of the zeolite.

6.    The catalyst composition of any preceding Claim wherein the silicate has a $SiO_2$ to $B_2O_3$ molar ratio of 10 to 10,000.

7.    A method for preparing a shape-selective metal-containing catalyst composition comprising contacting an ion-exchangeable form of a porous crystalline silicate which has a Constraint Index between 1 and 12 and in which boron is present in tetrahedral coordination, with an aqueous solution of a Group VIII metal compound to exchange and/or sorb said metal in ionic form into the silicate, the final composition containing less than 0.1% of elemental aluminum by weight of the composition on an ash basis.

8. The method of Claim 7 wherein, after the contacting step, the composition is thermally treated at a temperature of 100-500°C.

9. The method according to Claim 8, further comprising base-exchanging the Group VIII metal, boron-containing crystalline silicate after thermal treatment with Group IA metal cations.

10. A process for hydrocarbon conversion comprising contacting a hydrocarbon feedstock under conversion conditions with the shape-selective metallic catalyst composition of any one of Claims 1 to 6 or as prepared by the method of any one of Claims 7 to 9.